Europäisches Patentamt

(19) European Patent Office

Office européen des brevets

(11) Publication number: **0 038 718**
**B1**

(12) **EUROPEAN PATENT SPECIFICATION**

(45) Date of publication of patent specification: **27.08.86**

(51) Int. Cl.⁴: **H 01 B 1/20**

(21) Application number: **81301769.6**

(22) Date of filing: **21.04.81**

(54) Conductive polymer compositions containing fillers.

(30) Priority: **21.04.80 US 141984**
**21.04.80 US 141988**

(43) Date of publication of application:
**28.10.81 Bulletin 81/43**

(45) Publication of the grant of the patent:
**27.08.86 Bulletin 86/35**

(84) Designated Contracting States:
**AT BE CH DE FR IT LI NL SE**

(56) References cited:
**DE-A-2 805 875**
**DE-A-2 937 708**
**GB-A-1 469 312**
**US-A-3 385 959**
**US-A-3 689 618**
**US-A-3 760 495**

(73) Proprietor: **RAYCHEM CORPORATION**
**300 Constitution Drive**
**Menlo Park California 94025 (US)**

(72) Inventor: **Fouts, Robert W., J.R.**
**2924 Carson Street**
**Redwood City California 94063 (US)**
Inventor: **Whitney, David W.**
**30730 Lexington Street**
**173 Fremont California 94536 (US)**
Inventor: **Wasley, Robert**
**407 Hillway Drive**
**Redwood City California 94062 (US)**
Inventor: **Walty, Robert**
**617 Third Avenue**
**Redwood City California 94062 (US)**
Inventor: **Gotcher, Alan Jeffrey**
**12260 Country Squire Lane**
**Saratoga California 95070 (US)**

(74) Representative: **Benson, John Everett et al**
**Raychem Limited Intellectual Property Law**
**Department Swan House 37-39, High Holborn**
**London WC1 (GB)**

## Description

This invention relates to conductive polymer compositions.

Conductive and semi-conductive compositions comprising carbon black dispersed in a polymer are known. They may have room temperature resistivities ranging from less than ohm · cm to $10^8$ ohm · cm or more, and may exhibit positive temperature coefficient (PTC) behaviour, zero temperature coefficient (ZTC or constant wattage) behaviour or negative temperature coefficient (NTC) behaviour. Reference may be made, for example, to US—A—2,978,655, US—A—3,351,882, US—A—3,823,217, US—A—3,861,029, US—A—3,950,604, US—A—4,017,715, US—A—4,177,376 and US—A—4,246,468, to DE—A—2,413,475, DE—A—2,746,602, DE—A—2,755,076 and DE—A—2,821,570, to J. Applied Polymer Science *19* 813—815 (1975), Klason and Kubat, and to Polymer Engineering and Science *18* 649—653 (1978), Narkis et al. Recent advances in this field are described in DE—A—2,948,350 DE—A—2,948,281, DE—A—2,949,173 and DE—A—3,002,721, and in EP—A—20081, EP—A—26571, EP—A—28142, EP—A—38713, EP—A—38714, EP—A—38715, EP—A—38716 and EP—A—38717.

Examples of conductive and semi-conductive compositions comprising conductive particles dispersed in a polymer are known. For example US—A—3689619 describes a carbon composition resistor comprising a conductive particulate component, a non-conductive particulate component, and a silicone resin binder. DE 2937708 describes a PTC element composed of carbon black in an organic polymer, the conductive carbon black having a particle size (D) in nm and a surface area S in $m^2/g$ such that S/D is at least 10.

US—A—3760495 discloses a conductive polymer composition having a positive temperature coefficient of resistivity. The polymer is filled with conductive particles and may include additional non-conducting additives.

The resistivity of a conductive polymer at a particular temperature can be changed by subjecting it to thermal cycling, i.e. by exposing it to elevated temperature followed by cooling. The change is often particularly marked when the composition is first exposed to elevated temperature after it has been shaped. When the polymer is an elastomer, although initial exposure to elevated temperature often produces the greatest change, the room temperature resistivity remains very unstable, i.e. it is changed very substantially by further exposure to heat. When the polymer is crystalline, a composition having high resistivity can often be annealed above the polymer melting point to reduce its room temperature resistivity to a value which is in the range $10^2$ to $10^6$ ohm · cm and which is relatively stable, i.e. it is changed, but only relatively slowly, by further exposure to heat. However, even this relatively slow change in resistivity is undersirable. We have discovered that in certain compositions, as defined below, these continued changes in room temperature resistivity on thermal cycling (after an initial heat treatment) can be reduced or even substantially eliminated by inclusion of a suitable amount of a non-conductive filler.

In one aspect, the invention provides a conductive polymer composition comprising a polymer component which comprises a crystalline polymer and a particulate filler component which has been dispersed in the polymer component and which comprises carbon black and a non-conductive particulate filler, said composition having been subjected to a thermal cycle which consists of heating the composition from 23°C to $T_{test}$ and cooling the composition from $T_{test}$ to 23°C, where $T_{test}$ is 20°C above the crystalline melting point of the polymer, the polymer component having a crystallinity of at least 10% and constituting up to 60% by weight of the composition; the particulate filler component having a total surface area of at least 1800 $m^2$ per 100 $cm^3$ of composition and comprising at least 4% by volume of the composition of at least one non-conductive particulate filler; the carbon black having a particle size D of 20 to 150 nm for example 20 to 75 nm, and a surface area S in $m^2/g$ such that S/D is not more than 10, and such that the quantity

$$\frac{S}{D} \times \frac{\text{volume of filler component}}{\text{volume of polymer component}}$$

is less than 1; and the volume of non-conductive filler being 0.3 to 0.8 times the volume of carbon black; and the non-conductive particulate filler having a particle size range from 0.1 to 100 μm.

Where reference is made herein to heating or cooling a composition, the heating or cooling is effected in such a way that the temperature of the composition changes at the rate of 2°C per minute.

The stability of the compositions to thermal cycling can be expressed as the ratio of the resistivity of the composition after the thermal cycle defined above to its resistivity after a second thermal cycle as defined. The higher the resistivity of the composition, the more the value of this ratio differs from the ideal value of 1. However, we have found that the difference between 1 and the said ratio is consistently less than it is for comparable compositions which do not contain a non-conductive filler as defined.

In another aspect the invention provides an electrical device which comprises a conductive polymer element and at least two electrodes which can be connected to a power source so that current flows through the element, and which is characterised in that the element has been prepared by melt-shaping a melt-shapeable conductive polymer composition as defined above.

The polymer component used in this invention has a crystallinity of at least 10% preferably at least 20%, as measured by x-ray diffraction.

In one preferred class of compositions, the crystalline polymer component is cross-linked, the gel fraction of the polymer (as calculated from the measured gel fraction of the composition) preferably being at least 0.6, especially at least 0.75.

In another preferred class the crystalline polymer component is substantially free of cross-linking and the composition exhibits sharply NTC behaviour above its melting point, that is to say, the composition, when heated from 23°C to an elevated temperature above the crystalline melting point of the polymer, $T_m$, has a resistivity which reaches a maximum at a temperature $T_{peak}$ and which then decreases in the temperature range $T_{peak}$ to $(T_{peak}+25)$ °C., to a value which is less than $10^5$ ohm $\cdot$ cm and less than $K \times {}^{23}_{0}\rho$ where ${}^{23}_{0}\rho$ is the resistivity of the composition at 23°C before said heating step, and K is 0.35, preferably 0.2, especially 0.1, particularly 0.05. NTC behaviour has been widely regarded as a disadvantage and for practical applications has been prevented by cross-linking the composition. However, we have realized that if the resistivity of such a composition falls sharply enough and far enough after reaching a peak, then the composition is of value in temperature-sensing devices and other electical devices, especially such devices which comprise an element composed of such an NTC composition and at least one other element composed of another conductive polymer composition. Furthermore, we have discovered how to select the components of the composition in order to provide such valuable NTC behaviour. It is desirable that an NTC composition of this invention should show a very sharp rise in resistivity as it is cooled from temperatures above $T_m$. Accordingly, it is preferred that the composition, when cooled from $(T_{peak}+25)$°C to 23°C., has a resistivity, as it is cooled, which increases to a maximum at a temperature $T_{peak\ B}$, and then falls to a value, designated herein as ${}^{23}_{1}\rho$ 23°C, and which has a minimum value in the temperature range $T_{peak\ B}$ to $(T_{peak\ B}+25)$°C which is less than $K^1 \times {}^{23}_{1}\rho$, where $K^1$ is 0.35, preferably 0.2, especially 0.1, particularly 0.05.

The polymer component generally comprises at least 40%, preferably at least 60%, especially substantially 100%, by weight of one or more polymers having a carbon-containing backbone. When the polymer component comprises more than one polymer, it is often preferred that each of the polymers should be crystalline. However, non-crystalline polymers can also be present. Suitable crystalline polymers include polyolefins, especially polyethylene (high density and low density) and polypropylene; halogenated polyolefins such as chlorinated polyethylene; copolymers which consist essentially of units derived from at least one olefin, preferably ethylene, and units derived from at least one olefinically unsaturated comonomer containing a polar group, preferably vinyl acetate, an acrylate ester, eg. methyl or ethyl acrylate, or acrylic or methacrylic acid, said comonomer-derived units preferably constituting at least 10% and generally not more than 30% by weight of the copolymer; and crystalline polymers which comprise 50 to 100%, preferably 80 to 100%, by weight of $-CH_2CHCl-$ or $-CH_2CF_2-$ units, eg. polyvinylidene fluoride or a copolymer of vinylidene fluoride eg. with tetrafluorethylene. Other suitable crystalline polymers are disclosed in the patents and applications referred to above.

The polymer component generally provides up to 60%, preferably 40 to 60%, by weight of the composition, the remainder being provided by the filler component and other non-particulate ingredients such as antioxidants

The compositions generally contain a single carbon black, but mixtures of carbon blacks can be used. The carbon black will preferably be the sole conductive material in the composition. We have surprisingly found that, for a composition containing a particular polymer and a given volume percent of a particular carbon black based on the polymer, the presence of the non-conductive filler does not cause any great change in the resistivity of the composition at 23°C or the basic nature of its resistivity/temperature relationship (i.e. PTC, ZTC or NTC). It is, therefore, possible to produce compositions having desired properties by making use of the information given in the patents and applications referred to above in order to select suitable combinations of carbon black and polymer.

In one preferred class of compositions, which generally exhibit NTC behaviour, the carbon black has a particle size (D) in nm and a surface area (S) in $m^2/g$ such that S/D is at least 10, preferably at least 12, especially at least 18, with D preferably less than 27, especially less than 18, particularly less than 15, nm.

The volume of carbon black is at least 4%, e.g. 4 to 20%, by volume of the composition, with 10 to 45% generally being used for PTC compositions, 4 to 20% for ZTC compositions and 4 to 45%, preferably 4 to 20%, e.g. 4 to 5%, for NTC.

The non-conductive particulate fillers have resistivities of greater than $10^6$, preferably greater than $10^8$, and often greater than $10^{10}$, ohm $\cdot$ cm. The particles may be solid or, in suitable cases, hollow. Excellent results have been obtained using glass beads. Other inorganic fillers which can be used include titanium dioxide, silica and antimony trioxide. Organic particulate fillers can also be used, for example particles which are composed of an organic polymer having a softening point such that the particles remain as a discrete particulate phase during use of the composition. The non-conductive filler may have a particle size which is smaller or greater than the carbon black, for example from 0.1 to 100 μm, preferably 1 to 70 μm.

It is usually convenient to use a single non-conductive filler, but mixtures of fillers can be used. The filler may have a surface coating of a wetting or coupling agent to render it more readily dispersible in the polymer component.

The volume of non-conductive filler is at least 4%, eg. 4 to 80%, preferably 6 to 30%, by volume of the composition. In PTC compositions, the volume of non-conductive filler is preferably less than, eg. 0.3 to 0.8 times, the volume of carbon black. In ZTC and NTC compositions the volume of non-conductive filler is preferably greater than, eg. 2 to 12 times, preferably 3 to 10 times, the volume of the carbon black.

The quantities and types of carbon black and non-conductive filler used should be such that they have total surface area of at least 1800 m² per 100 cm³ of composition, preferably at least 2000 m² per 100 cm³, especially at least 3000 m² per 100 cm³, particularly at least 4000 m² per 100 cm³, with higher values, eg. at least 8000 m² per 100 cm³, at least 10,000 m² per 100 cm³ and at least 12,000 m² per 100 cm³ being particularly preferred. The particulate filler component generally provides at least 10%, preferably at least 20%, particularly at least 25%, by volume of the composition.

Certain compositions containing carbon black and an arc-controlling additive such as alumina trihydrate are among those described and claimed in EP—A—38713.

The filler component can be dispersed in the polymer component in any suitable way. It is often convenient to use a master batch technique, ie. to disperse the carbon black in a part of the polymer, and then to mix the two master batches and the remainder of the polymer. The dispersion can be shaped by moulding or extrusion or another melt-shape technique into an element of the desired shape, any cross-linking thereof being carried out after such shaping.

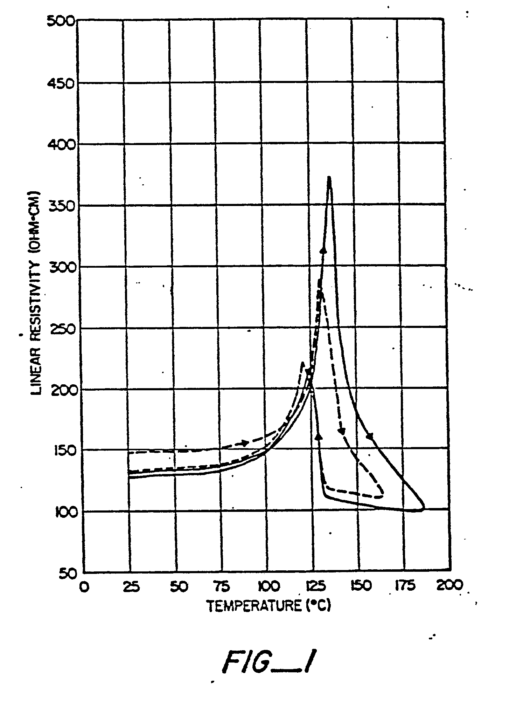

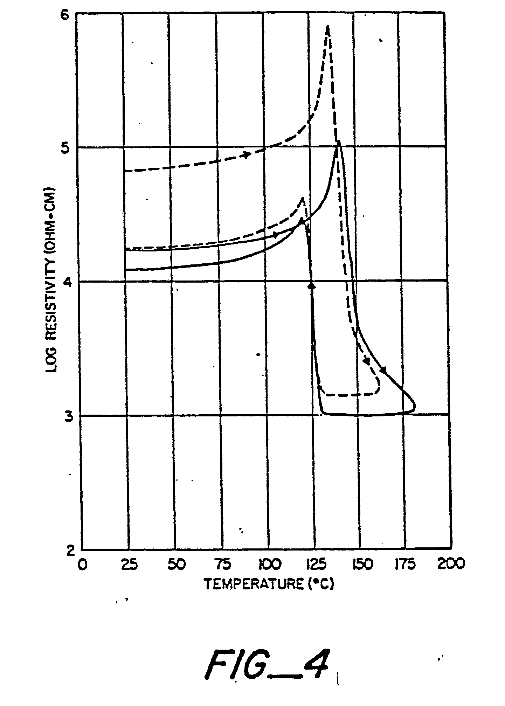

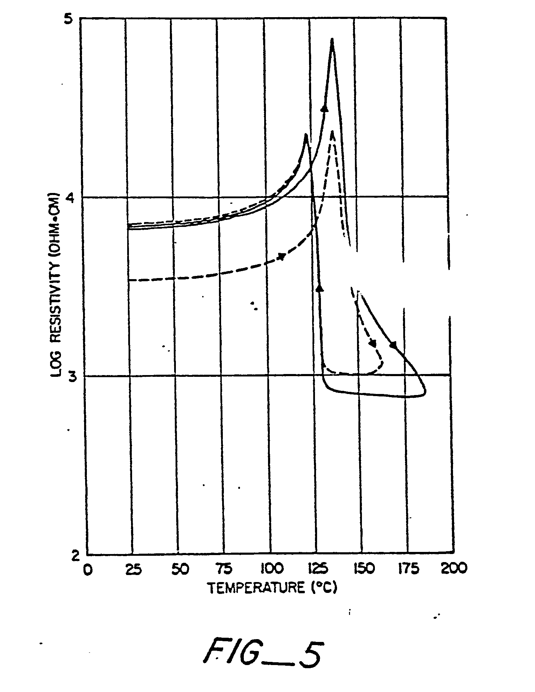

The invention is illustrated by the following Examples. Figures 1 to 5 show the variation of resistivity of the composition of selected Examples as a function of temperature during heating/cooling cycles.

Examples 1 to 7

The ingredients used in Examples 1 to 7 and the amounts thereof are set out in Table I below. The resistivities of the compositions as prepared, $^{23}_0\rho$, after a first thermal cycle as defined, $^{23}_1\rho$, and after a second thermal cycle as defined, $^{23}_2\rho$, are shown in Table 2. Examples 1, 6 and 7 are comparative Examples.

Example 1 (comparative)

The ingredients were introduced into a Banbury mixer with water-cooled rotors turning at high gear and were mixed at high gear for 4.5 minutes and at low gear for 1.5 minutes. The mixture was dumped, cooled and granulated. The granules were dried under vacuum at 70°C for 16 hours. A portion of the dried granules was compression molded into a slab 0.05 cm thick. Rectangular samples 2.5 cm×3.8 cm were cut from the slab and electrodes were placed on the samples by painting 0.6 cm×2.5 cm strips of a silver-Viton* composition (Electrodag* 504) on both surfaces

(*Trade Mark) at each end of the sample. The samples were thermally conditioned by maintaining them at 160°C for 15 minutes by external heating and then cooling to room temperature. The resistivity of the composition was calculated from sample resistance measurements taken at 3°C intervals as the samples were subjected to two thermal cycles, in the first of which the sample was externally heated from 23°C to 160°C and then cooled at 23°C and in the second of which the sample was externally heated from 23°C to 180°C and then cooled to 23°C.

Figure 1 shows the resistivity of the composition as a function of temperature during these cycles, the first cycle being shown as a broken line and the second as a solid line.

Example 2

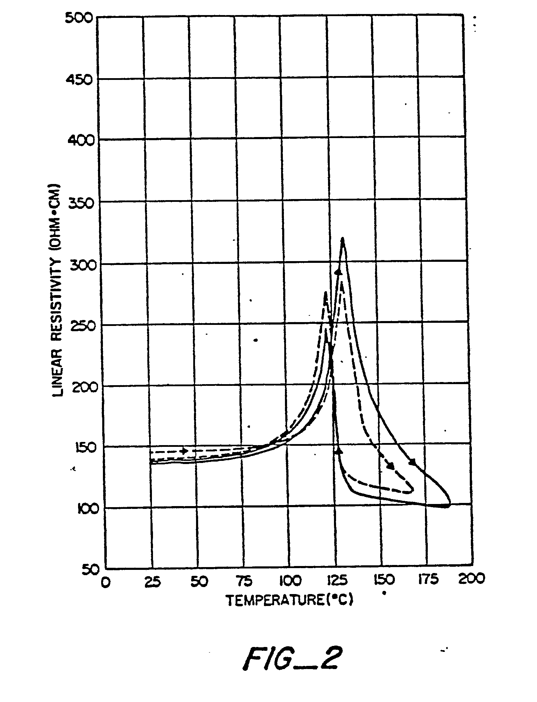

The procedure of Example 1 was followed except that the ingredients were as shown in Table I; the rotor was steam-heated until the torque increased considerably, when the steam was turned off and water was turned on; and the ingredients were mixed at high gear for 4 minutes. Figure 2 shows the resistivity of the composition during the heating and cooling cycles, the first cycle being shown as broken line and the second as a solid line.

Example 3

This example shows the production of a planar heater comprising planar mesh electrodes having between them a PTC layer and a contiguous ZTC layer composed of a composition according to the invention.

Preparation of ZTC sheet material

Master Batch 1 was prepared from the ingredients shown in Table I. The ingredients were introduced into a Banbury mixer whose rotor had been preheated by steam and was turning at fourth gear. When the torque had increased considerably, the steam to the rotor was turned off and water was passed through the rotor to cool it. Mixing was continued at fourth gear for 2.5 min after the water had been turned on and for a further 2 min at third gear. The mixture was dumped, held on a steam-heated mill, extruded into a water bath through a 8.9 cm. extruder fitted with a pelletizing die, and chopped into pellets. The pellets were dried under vacumm at 60°C for at least 18 hours.

Master Batch 2 was prepared from the ingredients shown in Table I. The ingredients were introduced into a Banbury mixer whose rotor was water-cooled and was turning at fourth gear; mixing was carried out at fourth gear for 2 min and at third gear for 1.75 min. The mixture was dumped, cooled and granulated. The granules were dried under vacuum at 60°C for at least 18 hours.

The final mix, containing the ingredients shown in Table I, was prepared by introducing 11,523 g of Master Batch 1, 3,127 g of Master Batch 2, 3,523 g of high density polyethylene (Marlex 6003—Trademark) and 77.7 g of anti oxidant into a Banbury mixer whose rotor was water-cooled and was turning at high gear; mixing was carried out at high gear for 4 mins. and at low gear for 1 min. The mixture was dumped, held on a steam-heated mill, extruded into a water bath through a 8.9 cm extruder fitted with a pelletizing die, and chopped into pellets. The pellets were dried under vacuum at 70°C for 24 hours, and then extruded into sheet 30 cm. wide and 0.053 cm thick, using a Davis-Standard Extruder fitted with a 15 inch sheet die and operating at 20 RPM with a throughput of 122 cm/minute. The sheet was stored under argon.

Preparation of PTC sheet material

The ingredients shown in Table I for the PTC material were introduced into a Banbury mixer. The mixture was dumped from the Banbury and converted into sheet by the same procedure as the Final Mix. The sheet was stored under argon.

Preparation of heater

Rectangles 22.2 cm×22.9 cm were cut from the ZTC sheet material and from the PTC sheet material, and dried under vacuum at 60°C for 9 hours. Two rectangles 20.3 cm×22.9 cm were cut from a sheet of fully annealed nickel mesh that had been thoroughly cleaned. The rectangles were sprayed until the nickel was completely covered, but the mesh apertures were not filled, with a composition containing 60 parts by weight of methylethyl ketone and 40 parts of Electrodag 502. The coated mesh rectangles were dried under vacuum for 2 hours at 100°C.

The PTC, ZTC and mesh rectangles were laminated to each other by layering a fluoroglass sheet (a release sheet of glass-fibre reinforced fluorinated polymer), a mesh electrode, a PTC layer, a ZTC layer, another mesh electrode, and another fluoroglass sheet in a mold and pressing with a 30.5 cm press with plate temperatures of 224°C (top) and 218°C (bottom) for 3.5 minutes at 12.5 tonnes ram pressure. The mold was then cooled in a 46 cm. cold press with air cooling at ram pressure for 5 minutes.

The resulting heater blank was masked, leaving 3.8 cm. at each end unmasked. A razor was used to scrape away PTC or ZTC material (which had been pressed through the coated mesh) from the mesh on opposite sides of the heater in the unmasked area. The scraped area on each side of the heater blank was then further abraded with a grit blaster.

Strips 2.5 cm×25.4 cm were cut from flat and fully annealed Cu mesh which had been thoroughly cleaned. One side of the strips was coated with a silver/silicone contact elastomer and strips were then dried in vacuum at room temperature for a minimum of 4 hours. One end of each of the strips were then bent back at a 45° angle and 0.02 cm×0.5 cm×15.2 cm flat copper wire was soldered onto the bent end. One of these strips was applied to each of the abraded areas of the heater blank with the silver side down and then each side of the heater blank was covered with a 22.2 cm×3.8 cm×0.03 cm polyethylene sheet. The assembly was placed between two 1.3 cm aluminium plates and compression molded at 200°C for 3 min under a 22.5 kN load and then placed in the cold press for 10 minutes under a 22.5 kN load.

Example 4

2191 g of Master Batch 1 as used in Example 3, 535 g of Master Batch 2 as used in Example 3, 709 g of Alathon 7050 (trademark) and 16 g of the antioxidant were mixed in a Banbury mixer (3.3 minutes at high gear, 1 minute at low gear), to give a final mix having the composition shown in Table I. The mixture was dumped, cooled and granulated. The granules were dried under vacuum at 60°C for at least 18 hours and then extruded into a tape using a 3/4 inch Brabender extruder and a 7.6 cm×0.05 cm tape die at 40 RPM. The extruded tape was taken off on a roll stack with the top roll at 115°C and the bottom roll at 95°C.

Example 5

The ingredients listed in Table I were introduced into a steam preheated Banbury mixer turning at high gear and were mixed for approximately one minute in high gear. At this point the torque increased considerably, the cooling water was turned on, and the mixing continued at high gear for one minute, then low gear for one minute. The material was dumped, cooled, and granulated, and the granules were dried at 60°C in vacuum for at least 18 hours. the granules were extruded into tape as in Example 4.

Example 6 (comparative)

642 g of Master Batch 2 as used in Example 3, 1836 g of Marlex 6003 and 41 g of antioxidant were added to a 5 lb. Banbury mixer turning at high gear. After 4.75 min, the torque increased considerably and cooling water was turned on; mixing was continued for 1.5 minutes, and the mixture was then dumped, cooled and granulated. The granules, whose composition is shown in Table I, were dried under vacuum for at least 18 hours at 60°C. The granules were extruded into tape as in Example 4.

Example 7 (comparative)

The ingredients listed in Table I were introduced into a Banbury mixer turning at high gear. After mixing for 5.6 minutes at high gear and 1.4 minutes in low gear, the mixture was dumped, cooled and granulated. The granules were dried at 60°C in vacuum at least 18 hours. The granules were extruded into tape as in Example 4.

Examples 8 to 10

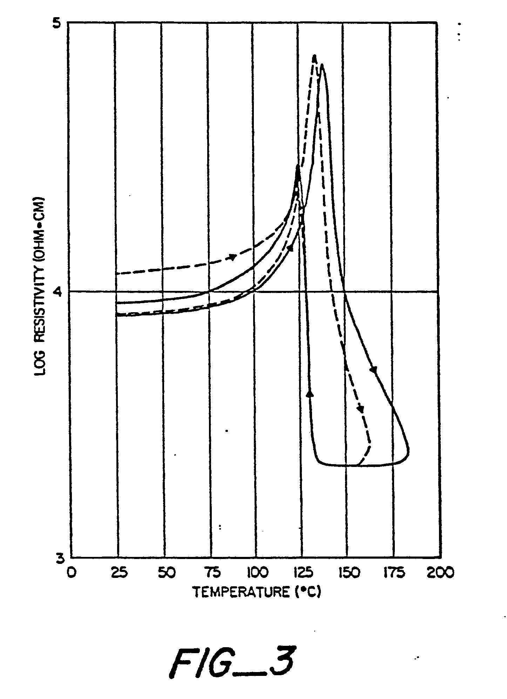

The ingredients used in Examples 8 to 10 and the amounts thereof are set out in Table III below. After mixing the ingredients and compression moulding the mixture into a slab as described in the Examples, rectangular samples 2.54 cm × 1.8 cm were cut from the slabs and silver electrodes were provided on the samples by painting 0.63 cm × 2.54 cm strips of a silver-Viton composition (Electrodag 504) on both surfaces at each end of the sample. Resistance measurements were taken at 3°C intervals as the sample was subjected to two thermal cycles. In the first cycle the sample was externally heated from 23°C to 160°C, maintained at 160°C for 15 minutes, and then cooled to 23°C. In the second cycle the sample was externally heated from 23°C to 180°C, maintained at 180°C for 15 minutes and then cooled to 23°C. Figures 3 to 5 show the resistivities of the compositions of Examples 8 to 10 respectively during these cycles, the first cycle being shown as a broken line and the second as a solid line.

## Example 8

The ingredients were mixed for 14 minutes in a Banbury mixer with steam-heated rotors turning at high gear and thereafter for 3.2 minutes with water-cooled rotors. The mixture was dumped, cooled and granulated. The granules were dried under vacuum at 70°C for 16 hours. A portion of the dried granules was compression molded into a slab 0.076 cm thick.

## Example 9

The ingredients shown under Master Batch 1 in Table III were introduced into a Banbury mixer with a steam-heated rotor turning at high gear. When the torque had increased considerably, the steam to the rotor was turned off and water was passed through the rotor to cool it. Mixing was continued for 4 min. after the water had been turned on. The mixture was dumped, cooled and granulated. The granules were dried under vacuum at 60°C for 18 hours.

The ingredients shown under Master Batch 2 in Table III were introduced into a Banbury mixer with a water-cooled rotor turning at high gear, and were mixed at high gear for 3.25 min and at low gear for 2.5 min. The mixture was dumped, cooled and granulated. The granules were dried under vacuum at 60°C for 18 hours.

The final mix, containing the ingredients shown in Table III, was prepared by introducing 2, 154 g of Master Batch 1, 439 g of Master Batch 2, 829 g of high density polyethylene (Marlex 6003) and 18.5 g of anti-oxidant into a Banbury mixer whose rotor was water-cooled and was turning at high gear; mixing was carried out at high gear for 3.3 min and at low gear for 1 min. The mixture was dumped, cooled and granulated. The granules were dried under vacuum at 70°C for 16 hours, and then compression molded into a slab 0.053 cm thick.

## Example 10

The procedure of Example 9 was followed except that the final mix was prepared by mixing 2, 186.5 g of Master Batch 1, 461 g of Master Batch 2, 780 g of high density polyethylene (Marlex 6003) and 17.4 g of anti-oxidant, and the samples were heat-treated, before the electrodes were provided thereon, by heating them to 200°C and then cooling them to room temperature.

TABLE I

| | Example 1 | | | Example 2 | | | Example 3 | | | | | | | | | | | |
| | | | | | | | Master batch 1 | | | Master batch 2 | | | Final mix | | | PTC | | |
| | g. | %wt. | %vol. | g. | %wt. | %vol. | g. | %wt. | %vol. | g. | %wt. | %vol. | g. | %wt. | %vol. | g. | %wt. | %vol. |
|---|---|---|---|---|---|---|---|---|---|---|---|---|---|---|---|---|---|---|
| Carbon black 1 (Raven 8000) | 405 | 15.6 | 9 | 303.8 | 8.7 | 6.75 | — | — | — | 6628 | 42.1 | 28 | 1317 | 7.2 | 7.6 | — | — | — |
| Carbon black 2 (Furnex N765) | — | — | — | — | — | — | — | — | — | — | — | — | — | — | | 7001 | 44 | 29.6 |
| Polyethylene 1 (Marlex 6003) | — | — | — | 1590 | 45.5 | 66.25 | — | — | — | — | — | — | 3480 | 19.1 | 10.7 | 8592 | 54 | 68.1 |
| Polyethylene 2 (Alathon 7050) | 2136 | 82.4 | 89 | — | — | — | 6186 | 27.3 | 49 | 8837 | 56.1 | 70 | 4900 | 26.9 | 15.0 | — | — | — |
| Inert filler (glass beads) | — | — | — | 1550 | 44.3 | 25 | 16306 | 72.1 | 50 | — | — | — | 8308 | 45.6 | 65.9 | — | — | — |
| Antioxidant | 52.5 | 2 | 2 | 52.5 | 1.5 | 2 | 138 | 0.6 | 1 | 276 | 1.8 | 2 | 203 | 1.2 | 0.8 | 318 | 2 | 2.3 |
| Total surface area of filler (m$^2$/100 cm$^3$) | | 15,100 | | | 11,400 | | | — | | | — | | | 12,800 | | | — | |

Notes:

Raven 8000 (available from City Services Co.) has a particle size (D) of 13 nm, a density of 1.8 g/cm$^3$, and a surface area (S) of 935 m$^2$/g.

Furnex N765 (available from City Services Co.) has a particle size (D) of 60 nm, a density of 1.8 g/cm$^3$, and a surface area (S) of 32 m$^2$g.

Marlex 6003 is a high density polyethylene with a melt index of 0.3 which is available from Phillips Petroleum Co.

Alathon 7050 is a high density polyethylene with a melt index of 18.0 which is available from E. I. DuPont de Nemours & Co.

The glass beads used are available from Potters Industries as Potters #3000 with CP-01 coating. They are spherical glass beads with a diameter of 4—44 μm and having a surface coating of a wetting or coupling agent thereon. They have a surface area of 0.1 m$^2$/g and a density of 2.48 g/cm$^3$.

The antioxidant used was an oligomer of 4,4-thio bis (3-methyl-6-t-butyl phenol) with an average degree of polymerization of 3—4, as described in U.S. Patent No. 3,986,981.

(Raven, Furnex, Marlex and Alathon are trademarks)

TABLE I *(continued)*

| | Example 4 | | | Example 5 | | | Example 6 | | | Example 7 | | |
|---|---|---|---|---|---|---|---|---|---|---|---|---|
| | g. | %wt. | %vol. | g. | %wt. | %vol. | g. | %wt. | %vol. | g. | %wt. | %vol. |
| Carbon black 1 (Raven 8000) | 202.5 | 5.9 | 4.5 | 259 | 7.5 | 5.8 | 270 | 10.7 | 6.0 | 326 | 12.8 | 7.2 |
| Polyethylene 1 (Marlex 6003) | — | — | — | — | — | — | 1836 | 72.9 | 76.9 | — | — | — |
| Polyethylene 2 (Alathon 7050) | 1656.5 | 48.0 | 69.0 | 1614 | 46.4 | 67.2 | 360.2 | 14.3 | 15.1 | 2178 | 85.2 | 90.8 |
| Inert filler (glass beads) | 1550 | 45.0 | 25.0 | 1550 | 44.6 | 25.0 | — | — | — | — | — | — |
| Antioxidant | 38.9 | 1.1 | 1.5 | 52.5 | 1.5 | 2.0 | 52.6 | 2.1 | 2.0 | 52.5 | 2.0 | 2.0 |
| Total surface area ($m^2/100\ cm^3$) | | 7,600 | | | 9,800 | | | 10,100 | | | 12,100 | |

TABLE II

| | Example 1 | Example 2 | Example 3 | Example 4 | Example 5 | Example 6 | Example 7 |
|---|---|---|---|---|---|---|---|
| $^{23}_{0}\rho$ | $1.48 \times 10^2$ | $1.44 \times 10^2$ | $7.33 \times 10^2$ | $6.10 \times 10^3$ | $1.31 \times 10^3$ | $>1 \times 10^6$ | $1.65 \times 10^4$ |
| $^{23}_{1}\rho$ | $1.31 \times 10^2$ | $1.37 \times 10^2$ | $1.06 \times 10^3$ | $1.50 \times 10^3$ | $7.28 \times 10^2$ | $1.17 \times 10^4$ | $2.18 \times 10^3$ |
| $^{23}_{2}\rho$ | $1.26 \times 10^2$ | $1.36 \times 10^2$ | $1.09 \times 10^3$ | $1.02 \times 10^3$ | $5.87 \times 10^2$ | $4.05 \times 10^3$ | $1.24 \times 10^3$ |
| $^{23}_{1}\rho/^{23}_{2}\rho$ | 0.96 | 0.99 | 1.03 | 0.68 | 0.81 | 0.35 | 0.57 |

## TABLE III

| | Example 8 | | | Examples 9 and 10 | | | | | | Example 9 Final mix | | | Example 10 Final mix | | |
| | | | | Master batch 1 | | | Master batch 2 | | | | | | | | |
| | g. | %wt. | %vol. | g. | %wt. | %vol. | g. | %wt. | %vol. | g. | %wt. | %vol. | g. | %wt. | %vol. |
|---|---|---|---|---|---|---|---|---|---|---|---|---|---|---|---|
| Carbon black 1 (Raven 8000) | 270 | 7.8 | 6 | — | — | — | 1260 | 42.1 | 28 | 185 | 5.4 | 4.1 | 194 | 5.6 | 4.3 |
| Polyethylene 1 (Marlex 6003) | 1608 | 46.2 | 67 | — | — | — | — | — | — | 829 | 24.1 | 34.6 | 780 | 22.7 | 32.7 |
| Polyethylene 2 (Alathon 7050) | — | — | — | 1152 | 26.8 | 48 | 1680 | 56.1 | 70 | 823.5 | 23.9 | 34.3 | 845 | 24.5 | 35.4 |
| Inert filler (glass beads) | 1550 | 44.3 | 25 | 3100 | 72 | 50 | — | — | — | 1551 | 45 | 25.0 | 1574 | 45.7 | 25.6 |
| Antioxidant | 52.5 | 1.5 | 2 | 52.5 | 1.2 | 2 | 52.5 | 1.8 | 2 | 52.2 | 1.5 | 2.0 | 52.2 | 1.5 | 2 |
| Total surface area of filler (m²/100 cm³) | 10,000 | | | — | | | — | | | 7,100 | | | 7,200 | | |

Notes:
Raven 8000 (available from City Services Co.) has a particle size (D) of 13 nm and a surface area (S) of 935 m²/g.
Marlex 6003 is a high density polyethylene with a melt index of 0.3 which is available from Phillips Petroleum Co.
Alathon 7050 is a high density polyethylene with a melt index of 18.0 which is available from E. I. DuPont de Nemours & Co.
The glass beads used are available from Potters Industries as Potters #3000 with CP-01 coating. They are spherical glass beads with a diameter of 4—44 μm and having a surface coating of a wetting or coupling agent thereon.
The antioxidant used was an oligomer of 4,4-thio bis (3-methyl-6-t-butyl phenol) with an average degree of polymerization of 3—4, as described in U.S. Patent No. 3,986,981.

## Claims

1. A conductive polymer composition comprising a polymer component which comprises a crystalline polymer and a particulate filler component which has been dispersed in the polymer component and which comprises carbon black and a non-conductive particulate filler, said composition having been subjected to a thermal cycle which consists of heating the composition from 23°C to $T_{test}$ and cooling the composition from $T_{test}$ to 23°C, where $T_{test}$ is 20°C above the crystalline melting point of the polymer, the polymer component having a crystallinity of at least 10% and constituting up to 60% by weight of the composition; the particulate filler component having a total surface area of at least 1800 $m^2$ per 100 $cm^3$ of composition and comprising at least 4% by volume of the composition of at least one non-conductive particulate filler; the carbon black having a particle size D of 20 to 150 nm and a surface area S in $m^2$/g such that S/D is not more than 10 and such that the quantity

$$\frac{S}{D} \times \frac{\text{volume of filler component}}{\text{volume of polymer component}}$$

is less than 1; the volume of non-conductive filler being 0.3 to 0.8 times the volume of carbon black; and the non-conductive filler having a particle size range from 0.1 to 100 μm.

2. A composition according to Claim 1, characterised in that the polymer component has a crystallinity of at least 10% and constitutes up to 60% by weight of the composition; the carbon black has a particle size D which is less than 27 millimicrons and a surface area S such that S/D is at least 12; and the volume of non-conductive filler is 2 to 12 times the volume of carbon black.

3. A composition according to Claim 1, characterised in that the polymer component has a crystallinity of at least 10% and is substantially free from cross-linking, and the carbon black (a) is present in amount 4 to 20% by volume of the composition and (b) has a particle size, D, which is less than 18 nm and a surface area, S, in $m^2$/g such that S/D is greater than 12.

4. A composition according to Claim 3, characterised in that S/D is at least 18 and D is less than 15 nm.

5. A composition according to Claim 2, 3 or 4, characterised in that volume of the non-conductive filler is from 2 to 12 times the volume of the carbon black.

6. A composition according to any one of the preceding claims characterised in that the particulate filler component has a total surface area of at least 4,000 $m^2$ per 100 $cm^3$ of composition and provides at least 20% by volume of the composition.

7. An electrical device which comprises a conductive polymer element and at least two electrodes which can be connected to a power source so that current flows through the element, characterised in that the element has been prepared by melt shaping a melt-shapeable conductive polymer composition as claimed in any one of claims 1 to 6.

## Patentansprüche

1. Eine leitfähige Polymerzusammensetzung, eine Polymerkomponente das ein kristallines Polymeres und eine teilchenförmige Füllstoffkomponente enthält, die in der Polymerkomponente dispergiert worden ist und die Russ und einen nicht-leitfähigen teilchenförmigen Füllstoff enthält, wobei die Zusammensetzung einem thermischen Zylus unterworfen worden ist, der darin besteht, dass die Zusammensetzung von 23°C auf $T_{test}$ erhitzt und von $T_{test}$ auf 23°C abgekühlt wird, und wobei $T_{test}$ 20°C über dem kristallschmelzpunkt des Polymeren liegt und die Polymerkomponente eine Kristallinität von mindestens 10% hat und bis zu 60 Gew.% der Zusammensetzung ausmacht und die teilchenförmige Füllstoffkomponente eine Gesamtoberfläche von mindestens 1800 $m^2$ je 100 $cm^3$ der Zusammensetzung hat und mindestens einen nicht-leitfähigen teilchenförmigen Füllstoff in einer Menge von mindestens 4% vom Volumen der Zusammensetzung enthält und der Russ eine Teilchengrösse D von 20 bis 150 nm und eine Oberfläche S in $m^2$/g so hat, dass S/D nicht mehr als 10 beträgt und die Menge

$$\frac{S}{D} \times \frac{\text{Volumen der Füllstoffkomponente}}{\text{Volumen der Polymerkomponente}}$$

weniger als 1 ist; und wobei das Volumen von nicht-leitfähigem Füllstoff das 0,3- bis 0,8 fach des Volumens von Russ beträgt und der nichtleitfähige Füllstoff eine Teilchengrösse im Bereich von 0,1 bis 100 μm hat.

2. Eine Zusammensetzung nach Anspruch 1, dadurch gekennzeichnet, dass die Polymerkomponente eine Kristallinität von mindestens 10% hat und bis zu 60% vom Gewicht der Zusammensetzung ausmacht, dass der Russ eine Teilchengrösse D hat, welche weniger als 27 nm beträgt, und eine Oberfläche S so, dass S/D mindestens 12 beträgt und das Volumen des nicht-leitfähigen Füllstoffs das 2- bis 12 fache des Volumens vom Russ ist.

3. Zusammensetzung nach Anspruch 1, dadurch gekennzeichnet, dass die Polymerkomponente eine Kristallinität von mindestens 10% hat und im wesentlichen frei von Vernetzung ist und der Russ (a) in einer Menge von 4 bis 20% vom Volumen der Zusammensetzung anwesend ist und (b) eine Teilchengrösse D hat, die weniger als 18 nm beträgt, und eine Oberfläche S in $m^2$/g so hat, dass S/D grösser als 12 ist.

4. Zusammensetzung nach Anspruch 3, dadurch gekennzeichnet, dass S/D mindestens 18 und D weniger als 15 nm ist.

5. Zusammensetzung nach Anspruch 2, 3 oder 4, dadurch gekennzeichnet, dass das Volumen des nicht - leitfähigen Füllstoffs das 2- bis 12 fache des Volumens des Russes beträgt.

6. Zusammensetzung nach einem der vorhergehenden Ansprüche, dadurch gekennzeichnet, dass die teilchenförmige Füllstoffkomponente eine Gesamtfläche von mindestens 4000 m$^2$ je 100 cm$^3$ der Zusammensetzung hat und mindestens 20% vom Volumen der Zusammensetzung ausmacht.

7. Eine elektrische Vorrichtung, die ein leitfähiges Polymerelement und mindestens zwei Elektroden umfasst, die mit einer Stromquelle verbunden werden können so, dass Strom durch das Element fliesst, dadurch gekennzeichnet, dass das Element durch Schmelzverformung einer schmelzverformbaren leitfähigen Polymerzusammensetzung wie in einem der Ansprüche 1 bis 6 beansprucht hergestellt worden ist.

**Revendications**

1. Composition polymère conductrice comprenant un constituant polymère qui comprend un polymère cristallin et un constituant de charge en particules qui a été dispersé dans le constituant polymère et qui comprend du noir de carbone et une charge en particules non conductrices, ladite composition ayant été soumise à un cycle thermique consistant à chauffer la composition de 23°C à $T_{test}$ et à refroidir la composition de $T_{test}$ à 23°C, où $T_{test}$ est supérieur de 20°C au point de fusion cristalline du polymère, le constituant polymère ayant une cristallinité d'au moins 10% et constituant jusqu'à 60% du poids de la composition; le constituant de charge en particles ayant une surface spécifique totale d'au moins 1800 m$^2$/100 cm$^3$ de composition et comprenant, à au moins 4% en volume de la composition, au moins une charge en particules non conductrices; le noir de carbone ayant une dimension D de particules de 20 à 150 nm et une surface spécifique S, en m$^2$/g, telle que S/D n'est pas supérieur à 10 et que la quantité

$$\frac{S}{D} \times \frac{\text{volume du constituant de charge}}{\text{volume du constituant polymère}}$$

est inférieure à 1; le volume de charge non conductrice étant de 0,3 à 0,8 fois le volume de noir de carbone; et la charge non conductrice ayant une dimension de particules comprise entre 0,1 et 100 µm.

2. Composition selon la revendication 1, caractérisée en ce que le constituant polymère possède une cristallinité d'au moins 10% et constitue jusqu'à 60% du poids de la composition; le noir de carbone possède une dimension D de particules qui est inférieure à 27 µm et une surface spécifique S telle que S/D est d'au moins 12; et le volume de la charge non conductrice est de 2 à 12 fois le volume du noir de carbone.

3. Composition selon la revendication 1, caractérisée en ce que le constituant polymère possède une cristallinité d'au moins 10% et est sensiblement exempt de réticulation, et le noir de carbone (a) est présent en quantité de 4 à 20%, en volume, de la composition, et (b) possède une dimension D de particules qui est inférieure à 18 nm et une surface spécifique S, en m$^2$/g, telle que S/D est supérieur à 12.

4. Composition selon la revendication 3, caractérisée en ce que S/D est d'au moins 18 et D est inférieur à 15 nm.

5. Composition selon la revendication 2, 3 ou 4, caractérisée en ce que le volume de charge non-conductrice est de 2 à 12 fois le volume du noir de carbone.

6. Composition selon l'une quelconque des revendications précédentes, caractérisée en ce que le constituant de charge en particules présente une surface spécifique totale d'au moins 4000 m$^2$/100 cm$^3$ de composition et fournit au moins 20% du volume de la composition.

7. Dispositif électrique qui comprend un élément polymère conducteur et au moins deux électrodes qui peuvent être connectées à une source d'énergie afin qu'un courant circule à travers l'élément, caractérisé en ce que l'élément est préparé par mise en forme à l'état fondu d'une composition polymère conductrice, pouvant être mise en forme à l'état fondu, selon l'une quelconque des revendications 1 à 6.

FIG—1

FIG_2

FIG_3

FIG_4

FIG_5